# EUROPÄISCHE PATENTSCHRIFT

(11) **EP 1 183 940 B1**
(45) Veröffentlichungstag und Bekanntmachung des Hinweises auf die Patenterteilung: **12.11.2003**
(21) Anmeldenummer: 01120199.3
(22) Anmeldetag: 23.08.2001
(51) Int. Cl.: A01D 75/20

(54) **Motorsense oder Freischneidgerät mit Schutzvorrichtung**
Motor scythe or brush cutter with protector device
Motofaucheuse ou débroussailleuse à dispositif de protection

(30) Priorität: 01.09.2000 DE 20015245 U
(43) Veröffentlichungstag der Anmeldung: 06.03.2002
(73) Patentinhaber: Schmitt, Paul, 97702 Münnerstadt (DE)
(72) Erfinder: Schmitt, Paul, 97702 Münnerstadt (DE)
(74) Vertreter: Pöhner, Wilfried Anton, Dr.

(56) Entgegenhaltungen:
- DE-A- 3 506 717
- DE-U- 8 703 547
- DE-U- 8 712 133
- DE-U- 9 112 271
- NL-C- 1 006 816
- US-A- 5 010 720
- US-A- 5 048 187

## Beschreibung

Die Erfindung bezieht sich auf eine Motorsense oder Freischneidegerät mit einer kreisbogenförmigen Schutzvorrichtung, die auf ihrer ganzen Länge über den Rotationsradius des Werkzeuges übersteht und deren untere Berandung oberhalb der vom rotierenden Werkzeug beschriebenen Ebene liegt, wobei die Schutzvorrichtung über eine arretierbare Aufhängung an einem Befestigungselement koaxial und nach oben schwenkbar mit der Antriebswelle verbunden ist.

Motorgeräte für die Grünpflege sind heutzutage als Stand der Technik anzusehen. Im Vergleich zur Handarbeit steigern sie die Effizienz der Arbeit, wobei sie gleichzeitig eine spürbare Arbeitserleichterung bewirken und einen hohen Komfort bei der Garten-, Park- und Land-Landschaftspflege sowie bei der Arbeit in Land- und Forstwirtschaft bieten.

Zu den Motorgeräten gehören unter anderem auch handliche Motorsensen und Freischneidegeräte, die hohes Leistungsvermögen miteinfacher Bedienbarkeit funktionell vereinen und die sich anhand ihrer Einsatzgebiete und anhand der für den Einsatz verwendeten Werkzeuge unterscheiden lassen.

Motorsensen sind für die Grünpflege im Gelände an den Stellen vorgesehen, die mit normalen Mähern nicht erreichbar sind. Sie werden auch für die Beseitigung von dichtem Gestrüpp und Bodendeckem oder zum Auslichten von zähem, knorrigem Ast- und Buschwerk verwendet.

Freischneidegeräte sind für das Abmähen von langstieligem Gras und zähem Gestrüpp vorgesehen, zum Freischneiden von jungen Forstkulturen und bei Mäh- und Pflegearbeiten im Obstbau oder allgemein in schwierigem Gelände. In der einer speziellen Version werden mit einem Kreissägeblatt bestückte Freischneider in der Forstwirtschaft für Sägearbeiten eingesetzt.

Wesentlich eindeutiger ist eine Unterscheidung anhand der eingesetzten Werkzeuge.

Die Motorsensen sind in der Regel mit einem Fadenmähkopf oder einem Grasschneideblatt ausgerüstet, wobei der Fadenmähkopf mit mehreren Schneidfäden oder beweglichen Kunststoffmessern bestückt ist. Er wird für leichte Mäh- und Ausputzarbeiten im Gras oder Unkraut, besonders in der Nähe von Hindernissen, verwendet. Im Vergleich dazu ist das Grasschneideblatt für Mäharbeiten auf größeren Flächen in starkem, trockenem und zähem Gras oder zum Abmähen von Brennnesseln und Schilf vorgesehen.

Dagegen sind die Freischneidegeräte im allgemeinen mit einem Dickicht- oder Häckselmesser oder einem Kreissägeblatt versehen. Dabei wird das Dickicht- oder Häckselmesser zum Auslichten und Beseitigen von zähem und verfilztem Gras oder Gestrüpp, aber auch zum Zurückschneiden von Dornenhecken eingesetzt. Während sich das Kreissägeblatt, das mit Spitzzähnen oder mit Meißelzähnen ausgerüstet sein kann, für knorriges und holziges Buschwerk oder dünne Baumstämme sowie für Säge- oder Rodungseinsätze eignet.

Diese verschiedenartigen Schneidwerkzeuge werden alle am unteren Ende des Geräteschaftes der Motorsense oder des Freischneidegerätes befestigt und von einem Motor am oberen Ende des Geräteschaftes über eine Welle angetrieben. Dabei werden die Schneidwerkzeuge in eine rotierende Bewegung bei sehr hohen Drehzahlen versetzt. Deshalb besteht für den Benutzer die Gefahr sich zu verletzen, wenn er in Kontakt mit den schnell kreisenden und scharfen Schneidkanten oder fäden zu kommen.

Die Geräte-Hersteller haben die Gefährdung der Anwender erkannt und bieten Schutzvorrichtungen bzw. Sicherheitsausrüstungen, wie z. B. einen Mähschutz für Mähköpfe und andere Schneidwerkzeuge sowie einen Häckselschutz für Häcksel- und Dickichtmesser oder einen Anschlag für Kreissägeblätter, an.

Alle bisher erhältlichen Schutzvorrichtungen haben aber den gravierenden Nachteil, dass sie die von dem rotierenden Werkzeug beschriebene Kreisfläche nur zu einem geringen Teil, zu etwa einem Viertel der Fläche, verdecken.

Als weiteren wichtigen Nachteil verdecken sie die vom rotierenden Werkzeug beschriebene Kreisfläche nur in Richtung auf den Benutzer hin, während die anderen Seiten frei zugänglich bleiben. Daher geht von den Motorsensen und Freischneidegeräten weiterhin eine Gefahr für unbeteiligte Dritte und andere Lebewesen aus, beispielsweise beim Einsatz in der Gartenpflege besonders für Kinder oder freilaufende Haustiere. Aber auch Nutz- und Zierpflanzen, wie Blumen, Gemüsepflanzen oder Bäume, können durch die Schneidwerkzeuge unbeabsichtigt zu Schaden kommen; bei Bäumen kann z. B. die Rinde durch ein Säge- oder Schneidblatt schwer verletzt und stark beschädigt werden.
Andererseits besteht auch eine hohe Wahrscheinlichkeit, dass die Schneidwerkzeuge zerstört, beschädigt oder zumindest stark, und daher vorzeitig, abgenutzt werden, wenn sie nicht entsprechend geschützt sind. Insbesondere an Mauern und Treppen oder in Randbereichen von Grünanlagen, an denen die Kanten und Begrenzungen häufig eingefasst sind, z. B. mit Steinen, Betonteilen o. ä., wird das Schneidwerkzeug leicht beschädigt.
Es ist daher notwendig, gefahrlos präzise arbeiten zu können, vor allem an den Begrenzungen und in Randbereichen von Grünflächen. Auf der anderen Seite soll aber in den übrigen, großflächigen Bereichen der Grünanlagen ein zügiges, schnelles Arbeiten weiterhin möglich sein, wozu das Schneidwerkzeug frei zugänglich sein muß.

Deshalb hat es sich die vorliegende Erfindung zur Aufgabe gemacht, eine Motorsense oder ein Freischneidegerät zur Verfügung zu stellen, die oder das mit einer Schutzvorrichtung versehen ist, die einerseits den Benutzer und Unbeteiligte allseitig vor einem direkten Kontakt mit dem rotierenden Werkzeug und andererseits das Werkzeug vor unbeabsichtigtem Kontakt mit Hindernissen schützt und die eine sichere und gefahrlose Handhabung während des Betriebes ermöglicht, aber dabei so bewegbar konstruiert ist, daß das Schneidwerkzeug bei Bedarf ungehindert zugänglich gemacht werden kann.

Diese Aufgabe wird erfindungsgemäß dadurch gelöst, dass die schwenkbare Schutzvorrichtung als Käfig gestaltet ist, wobei die kreisbogenförmige Berandung durch mehrere nach oben laufende Querstäbe mit der arretierbaren Aufhängung verbunden ist, wobei die kreisbogenförmige Berandung die vordere Hälfte des Schneidwerkzeugs ganz und den hinter der mittig positionierten Antriebswelle liegenden Bereich des Schneidwerkieugs teilweise abdeckt.

Ein wesentlicher Vorteil der Erfindung besteht darin, dass die Schutzvorrichtung eine kreisbogenförmige Berandung aufweist, deren Radius an den Radius des Kreisbogens angepasst ist, den das Werkzeug bei seiner rotierenden Bewegung beschreibt. Dadurch lassen sich tote Winkel und Ecken vermeiden, in denen das Werkzeug nicht wirken kann, etwa weil die Berandung eine unzweckmäßige eckige Form hat und/oder an manchen Stellen unnötig weit über den Bewegungsradius hinaussteht.

Vorteilhaft ist, dass die Berandung auf ihrer ganzen Länge nur geringfügig über den Rotationsradius des Werkzeugs übersteht. Dadurch lässt sich das Werkzeug optimal und präzise führen, weil bei der Draufsicht von oben jederzeit zu erkennen its, in welchen Bereich sich das werkzeug gerade bewegt.

Einen zusätzlichen Vorteil stellt die Erfindung dar, weil die Schutzvorrichtung aufklappbar und/oder verschwenkbar ist, wodurch das Werkzeug leicht und jederzeit zugänglich gemacht werden kann. Das ist sowohl für einfache Reparaturarbeiten als auch für einen schnellen Wechsel der Schneidwerkzeuge erforderlich, aber auch für das zügige Bearbeiten großer Flächen. Die Bewegbarkeit der Schutzvorrichtung kann entweder in vertikaler Richtung vorgesehen sein, z. B. als Hoch- und Runterklappen der Sicherheitseinrichtung, oder wird als Verschwenken in einer horizontalen Ebene realisiert.

Die Schutzvorrichtung ist in der oberen Endposition arretierbar, damit sie bei Reparaturarbeiten oder Austausch des Werkzeugs nicht unvorhergesehen herunterfallen kann und während des schnellen und effizienten Bearbeitens großflächiger Grünanlagen im hochgeklappten Zustand blockiert und gesichert ist.

Weitere vorteilhafte Ausgestaltungen der Erfindung sind Gegenstand von Unteransprüchen.

Eine wichtige und vorteilhafte Verbesserung der Erfindung besteht darin, dass die Schutzvorrichtung in der unteren Position arretierbar ist, wodurch vor allem ein unbeabsichtigtes Anheben oder Verschwenken der Schutzvorrichtung verhindert werden soll, was im Betrieb z. B. beim Anstoßen an Steine, Wurzeln usw. passieren kann. Durch die Arretierung in der unteren Position soll die Schutzvorrichtung vor allem selbst vor ungewollten Beschädigungen geschützt werden. Aber auch eine Verletzung von Personen beim Anstoßen der Schutzvorrichtung an deren Fuß und Anheben derselben wird durch eine arretierbare Einrichtung unmöglich gemacht.

Als weiterer, ganz allgemeiner Vorteil der Erfindung ist es möglich, die Schutzvorrichtung so auszugestalten, dass sie auch in anderen Positionen als der Endposition arretierbar ist. Dabei wird vor allem an ein geringfügiges Verschwenken oder Anheben gedacht, um die letzte Feinarbeit beim Mähen oder Beschneiden von Gesträuch zu machen oder um in engen Ecken und an scharfen Kanten auch noch maschinell arbeiten zu können. Eventuell ist es auch günstig für Schneidearbeiten in Schräglagen, z. B. an Hängen, die Schutzvorrichtung in verschiedenen weiteren Positionen außer den Endpositionen feststellen zu können.

Das führt zu einem anderen, nach Möglichkeit zu verwirklichenden Vorteil: die Arretierung der Schutzvorrichtung kann mit Hilfe eines einsteckbaren Splints oder mit einer Knebelschraube nebst Klemm-Muffe erfolgt. Dabei stellt ein Splint eine einfache und weitgehend versagensfreie Feststelleinrichtung dar; er kann aber nur in bestimmten Abständen in dafür vorgesehene Löcher eingeschoben werden, woraus sich dann einige wenige definierte Positionen für die Schutzvorrichtung ergeben. Dagegen bietet die Klemmmuffe mit Knebelschraube die Möglichkeit, die Schutzvorrichtung stufenlos einstellbar zu befestigen und ist daher besonders für ihre horizontal verschwenkbare Ausführung eine günstige Wahl.

Nach einem anderen Unteranspruch ist die Schutzvorrichtung vorteilhafterweise aus durchsichtigem Material oder in Form eines Käfigs gefertigt. Mit einem durchsichtigen Material lässt sich vor allem die vollständige Einsehbarkeit des Arbeitsbereiches, in dem das Werkzeug seine rotierende Bewegung vollführt, erreichen. Da ist ein weiterer wichtiger Gesichtspunkt für die Ausgestaltung, der der Arbeitssicherheit zugutekommt, aber sich auch günstig auf die leichte und effiziente Handhabung des Gerätes und die Qualität des Schnittes auswirkt. Falls zusätzlich für eine lange Arbeitsdauer die Gewichtsersparnis ein wichtiges Merkmal darstellt, kann die Schutzvorrichtung auch in Form eines Käfigs konstruiert sein, wodurch auch die vollständige Einsehbarkeit des Arbeitsbereiches sichergestellt ist.

Ein weiterer wichtiger Vorteil ergibt sich, wenn die Schutzvorrichtung in Leuchtfarbe gehalten ist, und durch ihre kräftige Farbe leicht zu erkennen ist, obwohl sie in dichtem Gras teilweise von diesem verdeckt wird oder im Gestrüpp und unter Büschen oder in Hecken oft im Halbdunkel gearbeitet werden muß.

Weitere Einzelheiten, Merkmale und Vorteile der Erfindung lassen sich dem nachfolgenden Beschreibungsteil entnehmen, in dem anhand von einer Zeichnung ein Ausführungsbeispiel der Erfindung erläutert ist.

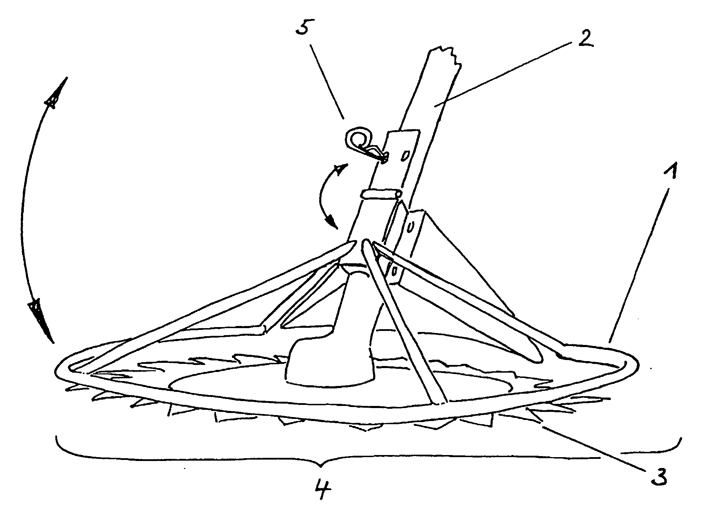

Die Figur zeigt eine Motorsense oder ein Freischneidegerät mit einer Schutzvorrichtung (1) sowie einem Geräteschaft (2) und einem rotierenden Werkzeug (3), wobei die Schutzvorrichtung eine kreisbogenförmige Berandung (4) aufweist, die auf ihrer ganzen Länge geringfügig über den Rotationsradius des Werkzeuges übersteht und geringfügig oberhalb der vom rotierenden Werkzeug beschriebenen Ebene liegt. Bei der gezeigten Ausführungsform der Erfindung ist die Schutzvorrichtung (1) am Geräteschaft (2) in vertikaler Richtung aufklappbar befestigt sowie in der oberen Endposition arretierbar. Die Arretierung erfolgt mit Hilfe eines einsteckbaren Splints (5) und die Schutzvorrichtung ist in Form eines Käfigs gefertigt.

## Patentansprüche

1. Motorsense oder Freischneidegerät mit einer kreubogenförmigen Schutzvorrichtung (4), die auf ihrer ganzen Lange geringfügig über den Rotationsradius des Werkzeuges übersteht und deren untere Berandung (4) geringfügig oberhalb der vom rotierenden Werkzeug (3) beschriebenen Ebene liegt, wobei die Schutzvorrichtung über eine arretierbare Hufhängung an einem Befestigungselement (5) koaxial und nach oben schwenkbar mit der Antriebswelle (2) verbunden ist und in der oberen Endposition arretierbar ist, **dadurch gekennzeichnet, dass**
- die schwenkbare Schutzvorrichtung (1) als Käfig gestaltet ist, wobei die kreisbogenförmige Berandung (4) durch mehrere nach oben laufende Querstäbe mit der arretierbaren Aufhängung verbunden ist, und
- die kreisbogenförmige Berandung (4) die vordere Hälfte des Schneidwerkzeugs (3) ganz und den hinter der mittig positionierten Antriebswelle (2) liegenden Bereich des Schneidwerkzeugs (3) teilweise abdeckt.

2. Motorsense oder Freischneidegerät nach Anspruch 1, **dadurch gekennzeichnet, dass** die Schutzvorrichtung in der unteren Endposition arretierbar ist.

3. Motorsense oder Freischneidegerät nach Anspruch 1 oder 2, **dadurch gekennzeichnet, dass** die Schutzvorrichtung auch in anderen Positionen als der Endposition arretierbar ist.

4. Motorsense oder Freischneidegerät nach einem der vorhergehenden Ansprüche, **dadurch gekennzeichnet, dass** die Arretierung mit Hilfe von einem einsteckbaren Splint oder mit einer Knebelschraube nebst Klemm-Muffe erfolgt.

5. Motorsense oder Freischneidegerät nach einem der vorhergehenden Ansprüche, **dadurch gekennzeichnet, dass** die Schutzvorrichtungtung aus durchsichtigem Material gefertigt ist.

6. Motorsense oder Freischneidegerät nach einem der vorhergehenden Ansprüche, **dadurch gekennzeichnet, dass** die Schutzvorrichtung in Leuchtfarbe gehalten ist.

## Claims

1. Motor scythe or brushcutter comprising a circular-arc-shaped protective device (4), which projects over its entire length slightly beyond the rotational radius of the tool and its lower rim (4) lying slightly above the plane described by the rotating tool (3), the protective device being connected coaxially to a fastening element (5) by means of a lockable suspension, and also being connected to the drive shaft (2) so as to be upwardly pivotable, and being lockable in the upper end position,
**characterised in that**
- The pivotable protective device (1) is designed as a cage, the circular arc-shaped rim (4) being connected by a plurality of upwardly extending cross bars to the lockable suspension, and
- the circular arc-shaped rim (4) partly covering the front half of the cutting tool (3) and partly covering that region of the cutting tool (3) lying behind the centrally positioned drive shaft (2)

2. Motor scythe or brushcutter according to Claim 1, **characterised in that** the protective device is lockable in the lower end position.

3. Motor scythe or brushcutter according to Claim 1 or 2, **characterised in that** the protective device is also lockable at positions other than the end position.

4. Motor scythe or brushcutter according to one of the preceding claims, **characterised in that** the locking is performed by means of an insertable pin or by means of a tommy screw together with a clamp socket.

5. Motor scythe or brushcutter according to one of the preceding claims, **characterised in that** the protective device is made of transparent material.

6. Motor scythe or brushcutter according to one of the preceding claims, **characterised in that** the protective device is in a fluorescent colour.

## Revendications

1. Faux à moteur ou débroussailleuse avec dispositif de protection (1) en forme d'arc de cercle dépassant légèrement du rayon de rotation de l'outil sur toute sa longueur et dont le bord inférieur (4) se situe au-dessus du plan décrit par l'outil en rotation (3), le dispositif de protection étant relié à un élément de fixation (5) coaxial à l'aide d'un système de blocage, pouvant être fixé en position haute et pouvant pivoter avec l'arbre de transmission (2),
**caractérisée en ce que**
- le dispositif de protection pivotant (1) a la forme d'une cage, le bord en forme d'arc de cercle (4) étant relié au système de blocage au moyen de plusieurs barres transversales allant vers le haut et
- le bord en forme d'arc de cercle (4) recouvrant entièrement la moitié avant de l'outil de coupe (3) et partiellement la partie de celui-ci située derrière l'arbre de transmission (2) au milieu de l'appareil.

2. Faux à moteur ou débroussailleuse selon la revendication 1, **caractérisée en ce que** le dispositif de protection peut être fixé en position basse.

3. Faux à moteur ou débroussailleuse selon la revendication 1 ou 2, **caractérisée en ce que** le dispositif de protection peut aussi être fixé dans plusieurs positions en dehors de ses positions finales.

4. Faux à moteur ou débroussailleuse selon l'une des revendications précédentes, **caractérisée en ce que** le blocage est assuré par une goupille amovible ou par une vis à garrot et un manchon de serrage.

5. Faux à moteur ou débroussailleuse selon l'une des revendications précédentes, **caractérisée en ce que** le dispositif de protection est réalisé dans un matériau transparent.

6. Faux à moteur ou débroussailleuse selon l'une des revendications précédentes, **caractérisée en ce que** le dispositif de protection est de couleur fluorescente.
